(19) Europäisches Patentamt
European Patent Office
Office européen des brevets

(11) **EP 2 210 003 B1**

(12) **EUROPÄISCHE PATENTSCHRIFT**

(45) Veröffentlichungstag und Bekanntmachung des Hinweises auf die Patenterteilung:
**16.01.2013 Patentblatt 2013/03**

(21) Anmeldenummer: **08802350.2**

(22) Anmeldetag: **18.09.2008**

(51) Int Cl.:
*F16B 37/12* *(2006.01)* *B21K 1/56* *(2006.01)*
*F16B 33/02* *(2006.01)* *B21H 3/00* *(2006.01)*

(86) Internationale Anmeldenummer:
**PCT/EP2008/007829**

(87) Internationale Veröffentlichungsnummer:
**WO 2009/062566 (22.05.2009 Gazette 2009/21)**

(54) **VERFAHREN ZUM HERSTELLEN EINES GEWINDEEINSATZES MIT INNEN- UND AUSSENGEWINDE UND GEWINDEEINSATZ**

METHOD FOR PRODUCING A THREADED INSERT WITH AN INTERNAL AND EXTERNAL THREAD, AND THREADED INSERT

PROCÉDÉ DE RÉALISATION D'UNE GARNITURE FILETÉE PRÉSENTANT UN FILETAGE INTÉRIEUR ET UN FILETAGE EXTÉRIEUR ET GARNITURE FILETÉE CORRESPONDANTE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **16.11.2007 DE 102007054798**

(43) Veröffentlichungstag der Anmeldung:
**28.07.2010 Patentblatt 2010/30**

(73) Patentinhaber: **Ludwig Hettich & Co.**
**78713 Schramberg-Sulgen (DE)**

(72) Erfinder:
• **HETTICH, Ulrich**
**78713 Schramberg (DE)**
• **HETTICH, Stefan**
**78713 Schramberg (DE)**

(74) Vertreter: **Liesegang, Eva**
**Boehmert & Boehmert**
**Pettenkoferstrasse 20-22**
**80336 München (DE)**

(56) Entgegenhaltungen:
**WO-A-82/00505 DE-U1- 9 017 935**
**US-A- 3 687 181 US-A1- 2007 009 341**

**EP 2 210 003 B1**

## Beschreibung

Die Erfindung betrifft ein Verfahren zum Herstellen eines Gewindeeinsatzes mit Innen- und Außengewinde, die jeweils frei wählbare Gewindesteigung und Gewindegangzahl haben, sowie einen Gewindeeinsatz. Bekannte Gewindeeinsätze dieser Art (US 3,687,181A, US 2007/009341A1) werden durch Rollen eines beidseitig mit den entsprechenden Gewindeprofilen vorgeformten Flachmaterials um eine Achse erzeugt, die in Längsrichtung des Gewindeeinsatzes verläuft, wobei eine Längsfuge verbleibt.

Solche Gewindeeinsätze werden als Verbindungselemente zum Erzeugen von Verbindungen von Bauteilen aus verschiedenen Werkstoffen, wie Verbindungen aus Stahl mit Kunststoff, Stahl mit Aluminium oder Stahl mit Holz eingesetzt. Die Gewindeeinsätze können sowohl bei der Herstellung der Bauteile verbaut oder eingebettet werden als auch zu Reparaturzwecken nachträglich eingebracht werden.

Bekannt und im Gebrauch sind massive Gewindehülsen mit Innen- und Außengewinde mit frei wählbaren Gewindesteigungen in eingängiger oder mehrgängiger Bauart. Solche Gewindehülsen lassen sich ideal an die Erfordernisse bei unterschiedlichen Werkstoffpaarungen anpassen. Allerdings ist die Herstellung durch Zerspanen höchst aufwendig und abfallträchtig aufgrund der großen anfallenden Spanvolumina.

Ferner sind aus Profildraht gewickelte Gewindeeinsätze bekannt, beispielsweise unter der Handelsbezeichnung HELICOIL. Bei solchen Gewindeeinsätzen ist die Steigung des Außengewindes zwangsläufig gleich der Steigung des Innengewindes. Die Herstellung solcher Gewindeeinsätze ist erheblich kostengünstiger. Jedoch ist ihr Einsatz aufgrund der gleichen Gewindesteigungen von Innen- und Außengewinde beschränkt, weil eine damit erzeugte Verbindung nur begrenzt belastbar ist.

Der Erfindung liegt die Aufgabe zugrunde, ein Verfahren zur Herstellung eines Gewindeeinsatzes der eingangs beschriebenen Art sowie einen Gewindeeinsatz zu schaffen, der einerseits kostenäunstig herstellbar ist und andererseits unbegrenzt für alle denkbaren Verbindungsaufgaben einsatzfähig ist.

Zur Lösung dieser Aufgabe dienen ein Verfahren gemäß Patentanspruch 1 und ein Gewindeeinsatz gemäß Patentanspruch 7.

Vorteilhafte Ausgestaltungen der Erfindung sind in den Unteransprüchen angegeben.

Wesentlich für die Erfindung ist die Erkenntnis, dass ein gewickelter Gewindeeinsatz aus einem beidseitig profilierten Profilband mit dem gewünschten Außengewindeprofil auf der Außenseite und dem gewünschten Innengewindeprofil auf der Innenseite die Bedürfnisse aller Anwendungsvarianten hinsichtlich der Herstellung, Belastbarkeit und Haltbarkeit der Verbindung vollständig befriedigen kann.

Es ist auch denkbar, dass das Außengewinde und das Innengewinde entgegengesetzte Gangrichtung haben, also das eine linksgängig und das andere rechtsgängig ausgebildet sind.

Bei unterschiedlichen Steigungen von Innengewinde und Außengewinde ist dafür zu sorgen, dass eine Wickelwindung des Profilbandes den ganzzahligen Vielfachen der Gewindewindungen entspricht. Dies ist durch die Ausgestaltung der Erfindung gemäß den Ansprüchen 5 und 11 sichergestellt.

In einem auf das Profilband bezogenen Koordinatensystem X, Y sind in den Ansprüchen 6 und 12 die Steigungswinkel für das Außengewinde und für das Innengewinde in allgemeiner Form angegeben, die für die jeweilige Gewindeprofilierung im Profilband zu wählen sind. Der Gewindeeinsatz kann außer aus den gängigen Metallen mindestens teilweise auch aus Kunststoff gefertigt sein.

Um mit dem Eindrehteil des fertig gewickelten Gewindeeinsatzes ein problemloses Gewindefurchen zu ermöglichen, ist von Vorteil, wenn im Bereich der Eindrehspitze einschließlich von ein bis zwei Windungen des Außengewindes im anschließenden Schaftbereich das Profilband aus einem für das Gewindefurchen besonders geeigneten Material, wie einem härtbaren Stahl, und im lastübertragenden Bereich des anschließenden Schaftes aus einem rostfreien Stahl gefertigt ist. Dies ermöglicht ein Verfahren nach Anspruch 3.

Ausgehend von einem Profilband gemäß der Erfindung können durch Wickeln und anschließendes mehrfaches Trennen senkrecht zur Wickelachse beliebig lange Gewindeeinsätze schnell und wirtschaftlich hergestellt werden, vorzugsweise aus metallischen Werkstoffen aller Art.

Mit dem Verfahren nach der Erfindung läßt sich der Wickelsteigungswinkel während des Wickelns des Profilbandes so variieren, wie dies von der Anmelderin in der deutschen Patentschrift 10 2007 035 183 vorgeschlagen worden ist.

Das Verfahren gemäß der vorliegenden Erfindung erlaubt die Herstellung zumindest längerer Gewindestangen wirtschaftlicher als die Herstellung durch Zerspanen von Vollmaterial. Dabei wäre die Breite des Profilbandes auf die kleinste Steigung des Außengewindes einzurichten.

Bei dem Verfahren gemäß der Erfindung fällt bei der Herstellung praktisch kein Abfall an, da alle wesentlichen Arbeitschritte durch Umformen und nicht durch Zerspanen erfolgen.

Die Erfindung ist im folgenden anhand schematischer Zeichnungen an Ausführungsbeispielen mit weiteren Einzelheiten näher erläutert. Es zeigen:

Fig. 1 bis 4 eine erste Ausführung eines Gewindeeinsatzes gemäß der Erfindung, nämlich

Fig. 1 eine Seitenansicht,

Fig. 2 eine Stirnansicht von der Kopfseite des Gewindeeinsatzes her gesehen,

Fig. 3 einen Teil eines verlängerten Gewindeeinsatzes gemäß der ersten Ausführung,

Fig. 4 einen Schnitt nach der Linie IV-IV in Fig. 3;

Fig. 5 bis 7 eine zweite Ausführung gemäß der Erfindung, nämlich

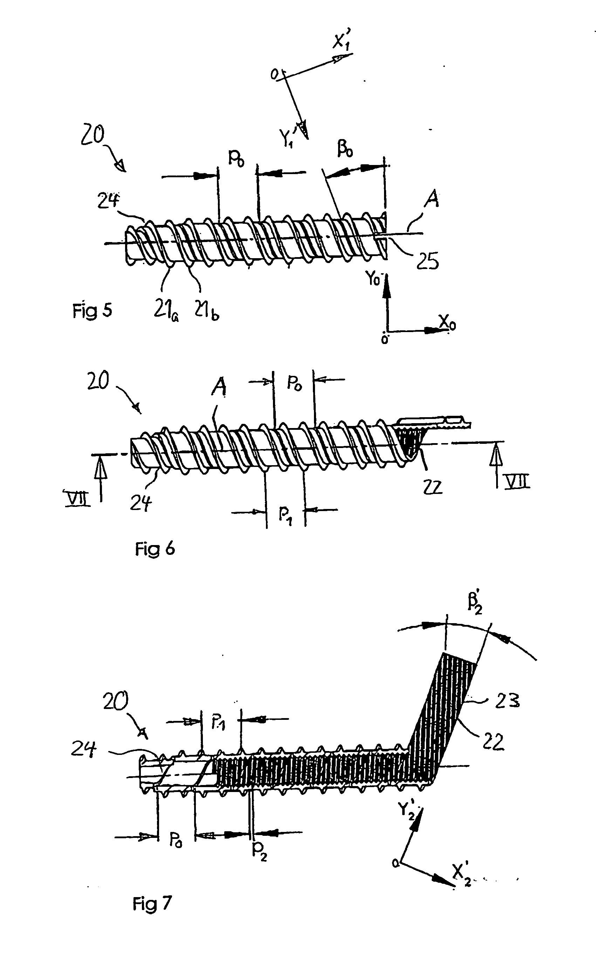

Fig. 5 eine Seitenansicht eines Gewindeeinsatzes gemäß der zweiten Ausführung,

Fig. 6 eine Seitenansicht des Teils eines verlängerten Gewindeeinsatzes gemäß der zweiten Ausführung,

Fig. 7 einen Schnitt nach der Linie VII-VII in Fig. 6;

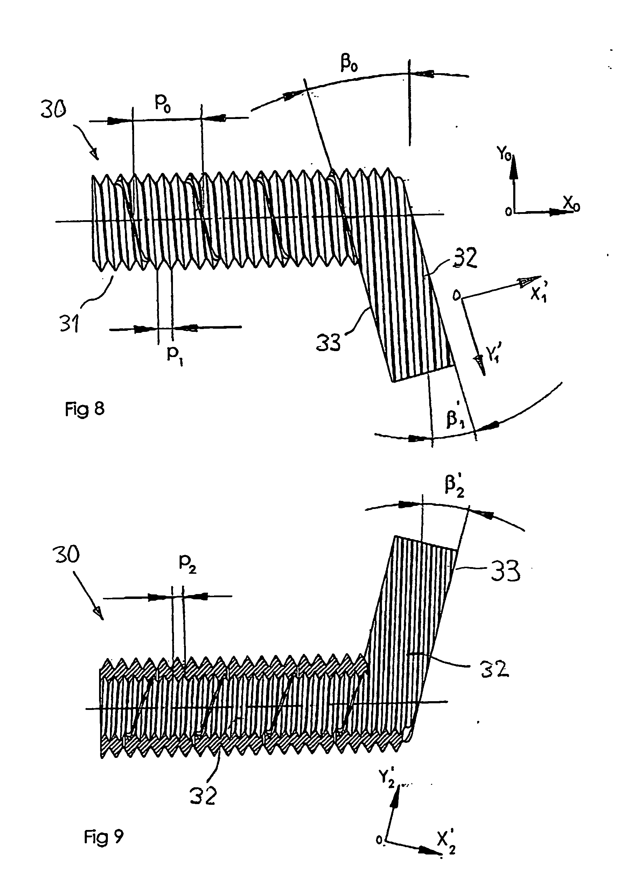

Fig. 8 und 9 eine dritte Ausführung eines Gewindeeinsatzes gemäß der Erfindung, nämlich Fig. 8 eine Seitenansicht eines Teils des Gewindeeinsatzes nach der dritten Ausführung, und

Fig. 9 einen Schnitt ähnlich Fig. 7 des Gewindeeinsatzes nach Fig. 8;

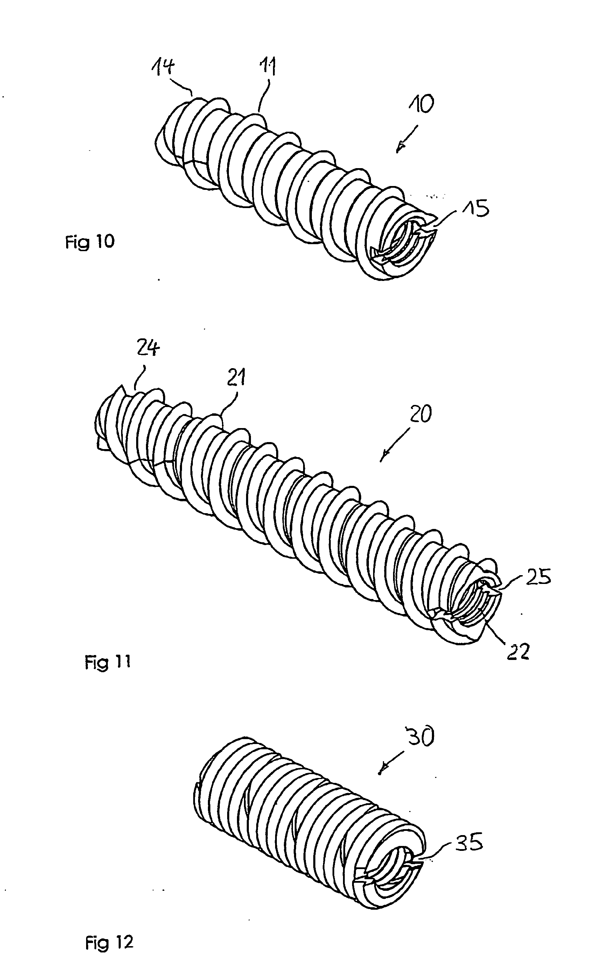

Fig. 10 bis 12 perspektivische Ansichten dreier unterschiedlicher Gewindeeinsätze gemäß der Erfindung, nämlich

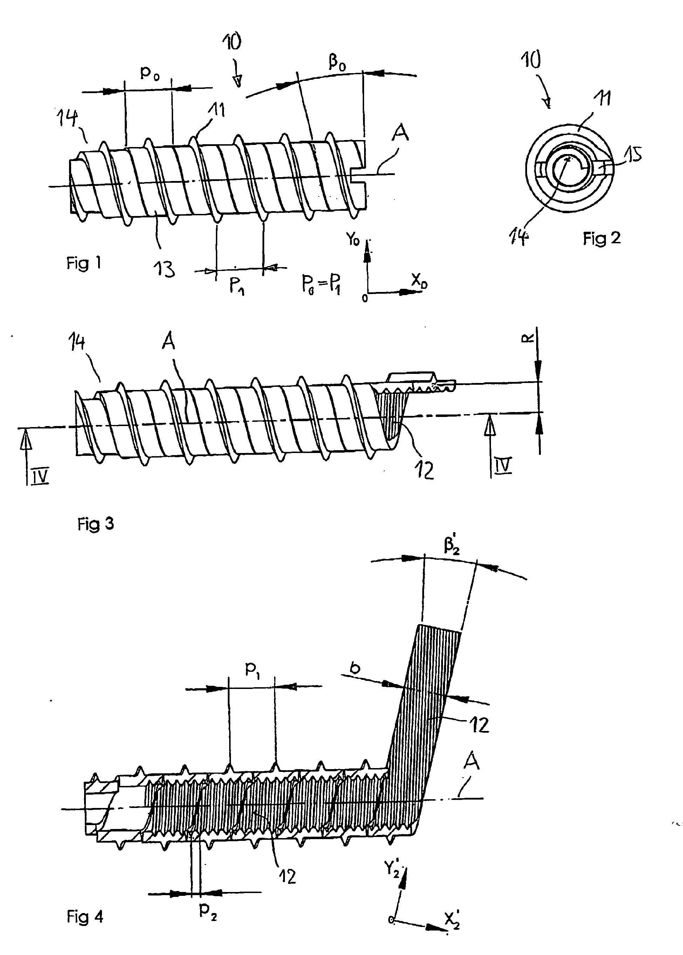

Fig. 10 einen Gewindeeinsatz nach Fig. 1,

Fig. 11 einen Gewindeeinsatz nach Fig. 5 und

Fig. 12 einen Gewindeeinsatz gemäß Fig. 8.

Im folgenden bedeuten:

Index 0 - Profilband,

Index 1 - Außengewinde,

Index 2 - Innengewinde,

R - Radius der neutralen Faser des Querschnitts des Gewindeeinsatzes, bei dem die Biegebeanspruchung zu Null wird,

$g_1$, $g_2$ - Anzahl der Gänge des Außen- bzw. Innengewindes,

$p_0$ - Wickelsteigung des Profilbandes,

$p_1$, $p_2$ - Gewindesteigung des Außen- bzw. Innengewindes,

$n_1$, $n_2$ - Anzahl der Windungen des Außen- bzw. Innengewindes über die Länge der Wickelsteigung $p_0$,

$\beta_0$ - Wickelsteigungswinkel des Profilbandes in einem auf die Achse A des Gewindeeinsatzes bezogenen Koordinatensystem $X_0$, $Y_0$,

$\beta_1'$, $\beta_2'$ - Gewindesteigungswinkel von Innen-/Außengewinde in auf das Profilband bezogenen Koordinatensystemen $X_1'$, $Y_1'$ und $X_2'$, $Y_2'$, in welchem die $Y'_{1,2}$-Achsen jeweils parallel zur Längsrichtung des Bandes und die $X'_{1,2}$-Achsen jeweils in Breitenrichtung des Bandes verlaufen.

Im folgenden sind drei Ausführungen eines Gewindeeinsatzes gemäß der Erfindung beschrieben. Für alle drei Ausführungen gelten die nachfolgenden Betrachtungen und Formeln.

Bei vorgegebenen Werten für die Wickelsteigung $p_0$ und den Radius R der neutralen Faser errechnet sich der Steigungswinkel $\beta_0$ der Wickelsteigung zu

$$\beta_0 = \arctan \left( \frac{p_0}{2 \cdot \pi \cdot R} \right)$$

Damit ergibt sich die die Breite b des Profilbandes zu

$$b = p_0 \cdot \cos \beta_0.$$

Die Wickelsteigung $p_0$ lässt sich als Vielfaches der Gewindesteigungen $p_1$ des Außengewindes und $p_2$ des Innengewindes darstellen:

$$n_1 \cdot p_1 = p_0$$

$$n_2 \cdot P_2 = p_0.$$

Ein Profilband mit darin vorgesehenen Nuten für ein Außen- und ein Innengewinde ist mit folgenden Winkelvorgaben für die Steigungswinkel $\beta_1'$ (Außengewinde) und $\beta_2'$ (Innengewinde) ausführbar:

Außengewinde:

In einem $X_1'$-/ $Y_1'$-Koordinatensystem ist der Steigungswinkel $\beta_1$ des Außengewindes zur Längsrichtung des Profilbandes bestimmt durch

$$\beta_1' = \beta_0 - \arctan\left(\frac{p_0}{n_1 \cdot 2 \cdot \pi \cdot R}\right)$$

Innengewinde:

In einem $X_2'$-/$Y_2'$-Koordinatensystem des Profilbandes ist der Steigungswinkel des Innengewindes zur Längsrichtung des Profilbandes bestimmt durch:

$$\beta_2' = \beta_0 - \arctan\left(\frac{p_0}{n_2 \cdot 2 \cdot \pi \cdot R}\right)$$

Nach diesen allgemeinen Überlegungen seien nun die in den Zeichnungen gezeigten Gewindeeinsätze im einzelnen beschrieben. Als erste Ausführung ist ein Gewindeeinsatz gemäß den Fig. 1 bis 4 aus einem Profilband 13 einer Breite b und einer Wickelsteigung $p_0$ unter einem Wickelsteigungswinkel $\beta_0$ gewickelt und in einem Koordinatensystem $X_0$, $Y_0$ dargestellt, in welchem die Achse A des Gewindeeinsatzes parallel zur $X_0$-Achse ist.

Der Gewindeeinsatz 10 hat ein eingängiges Außengewinde 11 gleicher Steigung $p_1$ wie die Wickelsteigung $p_0$ des Profilbandes 13. Es gilt somit $n_1 = 1$ und $p_0 = p_1$. Das Innengewinde 12 hat kleinere Steigung $p_2$. Für die Anzahl der Windungen gilt $n_2 = 5$, für die Gewindesteigungen somit $5 \cdot p_2 = p_0 = p_1$ und für die Steigungswinkel von Außen und Innengewinde $\beta'_1 = 0$, $\beta'_2 \neq 0$.

Die Gewindenuten des Außengewindes verlaufen somit parallel zu den Außenkanten des Profilbandes, wie in den Fig. 1 und 3 erkennbar.

Ein solches Profil kann einfach durch Ziehen oder Profilwalzen hergestellt werden.

Aus den Figuren 1 bis 4 ist erkennbar, dass im Bereich der Gewindespitze das Profilband zu einer konischen Verjüngung 14 gewickelt ist, um ein leichteres Eindrehen in eine vorgebohrte Öffnung zu ermöglichen.

Im Kopfbereich des Gewindeeinsatzes 10 ist eine Einkerbung 15 zum Einstecken eines Eindrehwerkzeuges (nicht gezeigt) vorgesehen.

In den Fig. 5 bis 7 sind alle Bezugszahlen um die Zahl 10 vergrößert gegenüber den Bezugszahlen zu Fig. 1. In den Figuren 5 bis 7 ist als zweite Ausführung ein Gewindeeinsatz 20 mit einem zweigängigen Außengewinde 21 mit den beiden Gewindegängen 21 a und 21 b dargestellt, wobei wiederum die Gewindesteigung $p_1$ gleich der Wickelsteigung $p_0$ ist. Das Innengewinde 22 ist eingängig und mit $n_2 = 10$ und entsprechend mit einer Gewindesteigung $10 \cdot p_2 = p_0$ ausgeführt. Auch hier ist der Steigungswinkel $\beta'_1 = 0$ (Fig. 5), während $\beta'_2 \neq 0$ ist (Fig. 7).

In den Figuren 8 und 9 sind alle Bezugszahlen wiederum um die Zahl 10 vergrößert gegenüber den Bezugszahlen zu Fig. 2. Als dritte Ausführung ist ein Gewindeeinsatz 30 mit eingängigem Außengewinde 31 dargestellt, dessen Gewindesteigung $p_1 < p_0$ ist. Mit $n_1 = 5$ gilt $5 \cdot p_1 = p_0$. Das Innengewinde 32 ist ebenfalls eingängig, und $p_2$ ist kleiner als $p_0$. Mit $n_2 = 7$ gilt also $7 \cdot p_2 = p_0$. Die Steigungswinkel $\beta'_1$ und $\beta'_2$ sind voneinander und von Null verschieden: $\beta'_1 \neq 0$, $\beta'_2 \neq 0$ und $\beta'_1 \neq \beta'_2$

Denkbar sind auch Ausführungen, bei denen Innen- und Außengewinde gegenläufig sind, also z. B. das Innengewinde ein Linksgewinde und das Außengewinde ein Rechtgewinde ist.

**Patentansprüche**

1. Verfahren zum Herstellen eines Gewindeeinsatzes mit Innen- und Außengewinde, die unterschiedliche oder gleiche Gewindesteigungen haben, wobei der Gewindeeinsatz auf seiner einen Seite mit dem Profil des Außengewindes (11) und auf seiner anderen Seite mit dem Profil des Innengewindes (12) vorgeformt wird, **dadurch gekennzeichnet, dass** der Gewindeeinsatz aus einem mit den entsprechenden Gewindeprofilen vorgeformten Profilband (13) gewickelt wird.

2. Verfahren nach Anspruch 1, **dadurch gekennzeichnet, dass** das Profilband aus mindestens einem Metallblech vorgeformt wird.

3. Verfahren nach Anspruch 2, **dadurch gekennzeichnet, dass** das Profilband aus zwei Blechen vorgeformt wird, die aus einem härtbaren Stahl im Bereich der Eindrehspitze des Gewindeeinsatzes und einem rostfreien Stahl im lastübertragenden Bereich des Gewindeeinsatzes bestehen, wobei die beiden Stahlbleche vor dem Wickeln durch Fügen, insbesondere Verschweißen, miteinander verbunden werden.

4. Verfahren nach einem der Ansprüche 1 bis 3, **dadurch gekennzeichnet, dass** das Profilband im Eindrehbereich des Gewindeeinsatzes mit einer konischen Verjüngung (14) gewickelt wird.

5. Verfahren nach einem der Ansprüche 1 bis 4, **dadurch gekennzeichnet, dass** die Gewindesteigungen ($p_1$, $p_2$) des Außengewindes und des Innenwindes zur Wickelsteigung ($p_0$) in folgender Beziehung stehen:

$$n_1 \cdot p_1 = n_2 \cdot p_2 = p_0,$$

worin

$n_1$ = Anzahl der Windungen des Außengewindes über die Länge der Wickelsteigung $p_0$,
$n_2$ = Anzahl der Windungen des Innengewindes über die Länge der Wickelsteigung $p_0$

sind und $n_1$, $n_2$ ganzzahlig sind.

6. Verfahren nach einem der Ansprüche 1 bis 5, **dadurch gekennzeichnet, dass** der Steigungswinkel $\beta_1'$ für das Außengewinde und der Steigungswinkel $\beta_2'$ für das Innengewinde jeweils in profilbandbezogenen Koordinatensystemen $X'_{1,2}$, $Y'_{1,2}$ sich aus den Beziehungen

$$\beta_1' = \beta_0 - \arctan\left(\frac{p_0}{n_1 \cdot 2 \cdot \pi \cdot R}\right)$$

$$\beta_2' = \beta_0 - \arctan\left(\frac{p_0}{n_2 \cdot 2 \cdot \pi \cdot R}\right)$$

ergeben, worin

R = Radius der neutralen Faser des Gewindeeinsatzes
$\beta_1'$ = Steigungswinkel des Außengewindes
$\beta_2'$ = Steigungswinkel des Innengewindes

sind.

7. Gewindeeinsatz mit Innen- und Außengewinde, die unterschiedliche oder gleiche Gewindesteigungen haben, wobei der Gewindeeinsatz auf seiner einen Seite mit dem Profil des Außengewindes (11; 21; 31) und auf seiner anderen Seite mit dem Profil des Innengewindes (12; 22; 32) vorgeformt ist, **dadurch gekennzeichnet, dass** der Gewindeeinsatz einen Wickel aus einem mit den entsprechenden Gewindeprofilen vorgeformten Profilband (13;23;33) darstellt.

8. Gewindeeinsatz nach Anspruch 7, **dadurch gekennzeichnet, dass** die Wickelsteigung ($p_0$) des Profilbandes (13; 23) gleich wie die Gewindesteigung ($p_1$) des Außengewindes (11; 21) oder die Gewindesteigung ($p_2$) des Innengewindes (12; 22) ist.

9. Gewindeeinsatz nach Anspruch 7, **dadurch gekennzeichnet, dass** die Wickelsteigung des Profilbandes (33) und die Gewindesteigung des Außengewindes (31) und/oder die Gewindesteigung des Innengewindes (32) unterschiedlich sind.

10. Gewindeeinsatz nach einem der Ansprüche 7 bis 9, **dadurch gekennzeichnet, dass** die Breite (b) des Profilbandes sich mit einem Wickelsteigungswinkel

$$\beta_0 = \arctan\left(\frac{p_0}{2\pi R}\right)$$

ergibt zu

$$b = p_0 \cdot \cos(\beta_0)$$

mit $p_0$ = Wickelsteigung, $\beta_0$ = Wickelsteigungswinkel in einem auf die Achse A des Gewindeeinsatzes bezogenen Koordinatensystem $X_0$, $Y_0$ und mit R = Radius der neutralen Faser.

11. Gewindeeinsatz nach einem der Ansprüche 7 bis 10, **dadurch gekennzeichnet, dass** die Gewindesteigungen ($p_1$, $p_2$) des Außengewindes und des Innengewindes zur Wickelsteigung ($p_0$) in folgender Beziehung stehen:

$$n_1 \cdot p_1 = n_2 \cdot p_2 = p_0,$$

worin

$n_1$ = Anzahl der Windungen des Außengewindes über die Länge der Wickelsteigung $p_0$,
$n_2$ = Anzahl der Windungen des Innengewindes über die Länge der Wickelsteigung $p_0$

sind und $n_1$, $n_2$ ganzzahlig sind.

12. Gewindeeinsatz nach einem der Ansprüche 7 bis 11, **dadurch gekennzeichnet, dass** der Steigungswinkel $\beta_1'$ für das Außengewinde und der Steigungswinkel $\beta_2'$ für das Innengewinde jeweils in profilbandbezogenen Koordinatensystemen $X'_{1,2}$, $Y'_{1,2}$ sich aus den Beziehungen

$$\beta_1' = \beta_0 - \arctan\left(\frac{p_0}{n_1 \cdot 2 \cdot \pi \cdot R}\right)$$

$$\beta_2{'} = \beta_0 - \text{arc tan} \left( \frac{p_0}{n_2 \cdot 2 \cdot \pi \cdot R} \right)$$

ergeben, worin

> R = Radius der neutralen Faser des Gewinde-einsatzes
>
> $\beta_1{'}$ = Steigungswinkel des Außengewindes
>
> $\beta_2{'}$ = Steigungswinkel des Innengewindes

sind.

**Claims**

1. A method for producing a threaded insert having an internal and external thread which have different or the same thread pitches, wherein the threaded insert is pre-shaped on the one side thereof with the profile of the external thread (11) and on the other side thereof with the profile of the internal thread (12), **characterized in that** the threaded insert is wound from a profile strip (13) which is pre-shaped with the corresponding thread profiles.

2. The method according to claim 1, **characterized in that** the profile strip is pre-shaped from at least one metal sheet.

3. The method according to claim 2, **characterized in that** the profile strip is pre-shaped from two metal sheets which consist of a hardenable steel in the region of the screw-in tip of the threaded insert, and a stainless steel in the load transmitting region of the threaded insert, wherein prior to the winding, the two steel sheets are connected to one another by joining, in particular welding.

4. The method according to any one of the claims 1 to 3, **characterized in that** the profile strip is wound in the screw-in region of the threaded insert to form a conical taper (14).

5. The method according to any one of the claims 1 to 4, **characterized in that** the thread pitches ($p_1$, $p_2$) of the external thread and internal thread have the following relation to the winding pitch ($p_0$):

$$n_1 \cdot p_1 = n_2 \cdot p_2 = p_0,$$

wherein

$n_1$= number of windings of the external thread over the length of the winding pitch $p_0$,

$n_2$= number of windings of the internal thread over the length of the winding pitch $p_0$,

and $n_1$, $n_2$ are integral.

6. The method according to any one of the claims 1 to 5, **characterized in that** the pitch angle $\beta_1{'}$ for the external thread and the pitch angle $\beta_2{'}$ for the internal thread, each of them in profile strip-related coordinate systems X'$_{1,2}$, Y'$_{1,2}$, result from the relations

$$\beta_1{'} = \beta_0 - \text{arc tan} \left( \frac{p_0}{n_1 \cdot 2 \cdot \pi \cdot R} \right)$$

$$\beta_2{'} = \beta_0 - \text{arc tan} \left( \frac{p_0}{n_2 \cdot 2 \cdot \pi \cdot R} \right)$$

wherein

> R= radius of the neutral axis of the threaded insert
>
> $\beta_1{'}$= pitch angle of the external thread
>
> $P_2{'}$= pitch angle of the internal thread.

7. A threaded insert having an internal and external thread which have different or the same thread pitches, wherein the threaded insert is pre-shaped on the one side thereof with the profile of the external thread (11; 21; 31) and on the other side thereof with the profile of the internal thread (12; 22; 32), **characterized in that** the threaded insert represents a winding from a profile strip (13; 23; 33) having the corresponding pre-shaped thread profiles.

8. The threaded insert according to claim 7, **characterized in that** the winding pitch ($p_0$) of the profile strip (13; 23) is equal to the thread pitch ($p_1$) of the external thread (11; 21) or the thread pitch ($p_2$) of the internal thread (12; 22).

9. The threaded insert according to claim 7, **characterized in that** the winding pitch of the profile strip (33) and the thread pitch of the external thread (31) and/or the thread pitch of the internal thread (32) are different.

10. The threaded insert according to anyone of the claims 7 to 9, **characterized in that** the width (b) of the profile strip, with a winding pitch angle of

$$\beta_0 = \text{arc tan} \left( \frac{p_0}{2\pi R} \right)$$

results to

$$b = p_0 \cdot \cos(\beta_0)$$

with $p_0$= winding pitch, $\beta_0$= winding pitch angle in a coordinate system $X_0$, $Y_0$ relating to the axis A of the threaded insert, and with R= radius of the neutral axis.

11. The threaded insert according to any one of the claims 7 to 10, **characterized in that** the thread pitches ($p_1$, $p_2$) of the external thread and the internal thread are related to the winding pitch ($p_0$) as follows:

$$n_1 \cdot p_1 = n_2 \cdot p_2 = p_0,$$

wherein

$n_1$= number of windings of the external thread over the length of the winding pitch $p_0$,
$n_2$= number of windings of the internal thread over the length of the winding pitch $p_0$

and $n_1$, $n_2$ are integral.

12. The threaded insert according to any one of the claims 7 to 11, **characterized in that** the pitch angle $\beta_1$' for the external thread and the pitch angle $\beta_2$' for the internal thread, each of them in profile strip-related coordinate systems $X'_{1,2}$, $Y'_{1,2}$, result from the relations

$$\beta_1' = \beta_0 - \text{arc tan} \left( \frac{p_0}{n_1 \cdot 2 \cdot \pi \cdot R} \right)$$

$$\beta_2' = \beta_0 - \text{arc tan} \left( \frac{p_0}{n_2 \cdot 2 \cdot \pi \cdot R} \right)$$

wherein

R= radius of the neutral axis of the threaded insert
$\beta_1$'= pitch angle of the external thread
$\beta_2$'= pitch angle of the internal thread.

## Revendications

1. Procédé pour fabriquer un insert fileté ayant un filetage interne et un filetage externe qui ont des pas de filetage différents ou identiques, dans lequel l'insert fileté est préformé sur un de ses côtés avec le profil du filetage externe (11) et sur son autre côté avec le profil du filetage interne (12), **caractérisé en ce que** l'insert fileté est enroulé à partir d'une bande profilée (13) qui est préformée avec les profils de filetage correspondants.

2. Procédé selon la revendication 1, **caractérisé en ce que** la bande profilée est préformée à partir d'au moins une feuille de métal.

3. Procédé selon la revendication 2, **caractérisé en ce que** la bande profilée est préformée à partir de deux feuilles de métal qui sont constituées d'un acier pouvant être durci dans la région de la pointe d'entrée de vis de l'insert fileté, et d'un acier inoxydable dans la région de transmission de charge de l'insert fileté, dans lequel, avant l'enroulement, les deux feuilles d'acier sont connectées entre elles par un assemblage, en particulier par soudage.

4. Procédé selon l'une quelconque des revendications 1 à 3, **caractérisé en ce que** la bande profilée est enroulée dans la région d'entrée de vis de l'insert fileté pour former un effilement conique (14).

5. Procédé selon l'une quelconque des revendications 1 à 4, **caractérisé en ce que** les pas de filetage ($p_1$, $p_2$) du filetage externe et du filetage interne ont la relation suivante avec le pas d'enroulement ($p_0$) :

$$n_1 \cdot p_1 = n_2 \cdot p_2 = p_0,$$

où

$n_1$ = nombre d'enroulements du filetage externe sur la longueur du pas d'enroulement $p_0$,
$n_2$ = nombre d'enroulements du filetage interne
sur la longueur du pas d'enroulement $p_0$,
et $n_1$, $n_2$ sont des entiers.

**6.** Procédé selon l'une quelconque des revendications 1 à 5, **caractérisé en ce que** l'angle de pas $\beta_1'$ pour le filetage externe et l'angle de pas $\beta_2'$ pour le filetage interne, chacun d'eux dans des systèmes de coordonnées associés à la bande profilée $X'_{1,2}$, $Y'_{1,2}$, résultent des relations

$$\beta_1' = \beta_0 - \arctan\left(\frac{p_0}{n_1.2.\pi.R}\right)$$

$$\beta_2' = \beta_0 - \arctan\left(\frac{p_0}{n_2.2.\pi.R}\right)$$

où

R = rayon de l'axe neutre de l'insert fileté
$\beta_1'$ = angle de pas du filetage externe
$\beta_2'$ - angle de pas du filetage interne.

**7.** Insert fileté ayant un filetage interne et un filetage externe qui ont des pas de filetage différents ou identiques, l'insert fileté étant préformé sur un de ses côtés avec le profil du filetage externe (11 ; 21 ; 31) et sur son autre côté avec le profil du filetage interne (12 ; 22 ; 32), **caractérisé en ce que** l'insert fileté représente un enroulement à partir d'une bande profilée (13 ; 23 ; 33) ayant les profils de filetage préformés correspondants.

**8.** Insert fileté selon la revendication 7, **caractérisé en ce que** le pas d'enroulement ($p_0$) de la bande profilée (13 ; 23) est égal au pas de filetage ($p_1$) du filetage externe (11 ; 21) ou au pas de filetage ($p_2$) du filetage interne (12 ; 22).

**9.** Insert fileté selon la revendication 7, **caractérisé en ce que** le pas d'enroulement de la bande profilée (33) et le pas de filetage du filetage externe (31) et/ou le pas de filetage du filetage interne (32) sont différents.

**10.** Insert fileté selon l'une quelconque des revendications 7 à 9, **caractérisé en ce que** la largeur (b) de la bande profilée, avec un angle de pas d'enroulement de

$$\beta_0 = \arctan\left(\frac{p_0}{2\pi R}\right)$$

résulte de

$$b = p_0.\cos(\beta_0)$$

avec $p_0$ = pas d'enroulement, $\beta_0$ = angle du pas d'enroulement dans un système de coordonnées $X_0$, $Y_0$ associé à l'axe A de l'insert fileté, et avec R = rayon de l'axe neutre.

**11.** Insert fileté selon l'une quelconque des revendications 7 à 10, **caractérisé en ce que** les pas de filetage ($p_1$, $p_2$) du filetage externe et du filetage interne sont reliés au pas d'enroulement ($p_0$) de la façon suivante :

$$n_1.p_1 = n_2.p_2 = p_0,$$

où

$n_1$ = nombre d'enroulements du filetage externe
sur la longueur du pas d'enroulement $p_0$,
$n_2$ = nombre d'enroulements du filetage interne
sur la longueur du pas d'enroulement $p_0$,
et $n_1$, $n_2$ sont des entiers.

**12.** Insert fileté selon l'une quelconque des revendications 7 à 11, **caractérisé en ce que** l'angle de pas $\beta_1'$ pour le filetage externe et l'angle de pas $\beta_2'$ pour le filetage interne, chacun d'eux dans des systèmes de coordonnées associés à la bande profilée $X'_{1,2}$, $Y'_{1,2}$, résultent des relations

$$\beta_1' = \beta_0 - \arctan\left(\frac{p_0}{n_1.2.\pi.R}\right)$$

$$\beta_2' = \beta_0 - \arctan\left(\frac{p_0}{n_2.2.\pi.R}\right)$$

où

R = rayon de l'axe neutre de l'insert fileté
$\beta_1'$ = angle de pas du filetage externe
$\beta_2'$ = angle de pas du filetage interne.

Fig 1

Fig 2

Fig 3

Fig 4

Fig 5

Fig 6

Fig 7

Fig 8

Fig 9

Fig 10

Fig 11

Fig 12

**EP 2 210 003 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3687181 A
- US 2007009341 A1
- DE 102007035183